# EUROPÄISCHE PATENTANMELDUNG

(11) **EP 3 788 853 A1**
(43) Veröffentlichungstag der Anmeldung: **10.03.2021**
(21) Anmeldenummer: 20193278.7
(22) Anmeldetag: 28.08.2020
(51) Int. Cl.: A01B 39/18, A01M 21/02, A01B 39/00

(54) **REIHEN-HACKMASCHINE**

(30) Priorität: 29.08.2019 AT 507492019
(71) Anmelder: Schöls, Jürgen, 3753 Hötzelsdorf (AT)
(72) Erfinder: Schöls, Jürgen, 3753 Hötzelsdorf (AT)
(74) Vertreter: Müllner, Martin

(57) **Zusammenfassung**

Reihen-Hackmaschine mit einer Hackeinheit (23) mit jeweils zwei beweglichen Hackelementen (1) pro Reihe, die jeweils ein um eine parallel zur Fahrtrichtung liegende Achse (14) schwenkbar angeordnetes Hackwerkzeug (16) aufweisen. Erfindungsgemäß erfolgt der Antrieb der Hackwerkzeuge (16) durch Zylinder (12), die im Wesentlichen vertikal angeordnet sind. Vorzugsweise greifen die Zylinder (12) an den Hackwerkzeugen (16) an einem Punkt zwischen dem untersten Ende der Hackwerkzeuge (16) und der Achse (14), um die sie schwenkbar sind, an. Das ist einerseits Platz sparend und ermöglicht es andererseits, die bewegten Massen klein zu halten. Vorzugsweise weisen die Hackwerkzeuge (16), quer zur Fahrtrichtung gesehen, einen Abstand zueinander auf, grenzen aber in Fahrtrichtung gesehen im geschlossenen Zustand zumindest aneinander. Damit ist das Risiko, dass sich Steine zwischen den Hackwerkzeugen (16) verklemmen, gering, obwohl trotzdem der gesamte Boden mit Ausnahme des Bereichs unmittelbar um die Nutzpflanzen (5) bearbeitet wird.

## Beschreibung

### Technisches Gebiet

Die vorliegende Erfindung betrifft eine Reihen-Hackmaschine mit einer Hackeinheit pro Reihe, wobei jede Hackeinheit zwei bewegliche Hackelemente aufweist, wobei jedes bewegliche Hackelement ein um eine parallel zur Fahrtrichtung liegende Achse schwenkbares Hackwerkzeug aufweist. Somit kann auch der Bereich zwischen den einzelnen Pflanzen in der Reihe gehackt werden.

### Stand der Technik

Bei handelsüblichen Reihen-Hackmaschinen, beispielsweise "Steketee IC", sind die Hackwerkzeuge um Achsen schwenkbar, welche vertikal angeordnet sind. In der Geschlossenstellung liegen die freien Enden der Hackwerkzeuge aneinander an und bilden zusammen einen v-förmigen Pflug, dessen Spitze allerdings gegen die Fahrtrichtung weist. Die Reihen-Hackmaschine wird so gesteuert, dass sich die Spitze des v-förmigen Pflugs genau auf die Nutzpflanzen, die in einer Reihe angesät sind, zu bewegt. Unmittelbar vor jeder Nutzpflanze, die durch eine Videokamera detektiert wird, wird der Pflug geöffnet, sodass die Nutzpflanze unbeschädigt zwischen den beiden Hackwerkzeugen durchgelassen wird. Bei der Schließbewegung bewegen sich die Hackwerkzeuge zwangsläufig in Richtung zur Nutzpflanze. Dies hat zwei Nachteile: Erstens kann die Nutzpflanze von der Erde, die durch die Hackwerkzeuge zur Nutzpflanze bewegt wird, verschüttet werden. Zweitens erfährt die Nutzpflanze durch den Impuls, der in der Erde durch die schnelle Bewegung der Hackwerkzeuge zur Nutzpflanze hin erzeugt wird, einen Schlag, was dafür sorgt, dass die Nutzpflanze in ihrem Wachstum gebremst wird.

Mittlerweile hat Steketee auch Hackwerkzeuge mit sichelförmigen Hackmessern im Programm. Von der vertikalen Drehachse weg ist ein Hackmesser (das vordere Hackmesser) nach hinten und das andere Hackmesser (das hintere Hackmesser) nach vorne ausgerichtet. Im geschlossenen Zustand sind die freien Enden der Hackmesser gegeneinander in Fahrtrichtung versetzt. Bei dieser Lösung bewegt sich das hintere Hackmesser bei der Öffnungsbewegung in Richtung zur Pflanze, sodass das Problem des Verschüttens und der Schläge besonders stark auftritt.

Es sind bereits Hackmaschinen bekannt, deren Hackwerkzeuge - in Fahrtrichtung gesehen - nur seitliche Bewegungen vollziehen, weil die Achsen, um die die Hackwerkzeuge schwenkbar sind, parallel zur Fahrtrichtung liegen. Beispielsweise ist solch ein System in EP 19209 A veröffentlicht. Bei dieser Hackmaschine ist für eine Reihe von Nutzpflanzen eine Hackeinheit mit zwei Hackelementen mit jeweils einem Hackwerkzeug vorgesehen, wobei die beiden Hackwerkzeuge einander im geschlossenen Zustand berühren. Hierbei kommt es zu dem Nachteil, dass sich zwischen den beiden Hackwerkzeugen Steine oder Blätter verfangen können, sodass die Hackelemente nicht vollständig schließen und somit Unkraut zwischen den Nutzpflanzen nicht zuverlässig entfernt wird. Die Zylinder, mit denen die Hackwerkzeuge betätigt werden, sind horizontal quer zur Fahrtrichtung angeordnet, sodass die Hackelemente sehr breit bauen.

Weiters ist aus FR 2804830 A eine Hackmaschine bekannt, die pro Reihe eine Hackeinheit mit nur einem Hackelement verwendet, dessen Hackwerkzeug seitlich bei jeder Nutzpflanze weggeschwenkt wird. Dies hat aber den Nachteil, dass der Weg, um den das Hackwerkzeug bewegt werden muss, größer ist. Das bedeutet, dass die Geschwindigkeit, mit der sich die Hackmaschine vorwärts bewegen kann, langsamer sein muss, bei gleicher Geschwindigkeit des Hackwerkzeugs. Weiters ist - wenn nur ein Hackwerkzeug verwendet wird - die nicht durchpflügte Fläche größer, da eine Seite um die Nutzpflanze herum nicht bearbeitet wird. Außerdem werden gemäß dieser Schrift die Hackwerkzeuge über einen zweiarmigen Hebel betätigt, welcher im Vergleich zu einem einarmigen Hebel ein höheres Massenträgheitsmoment aufweist und dadurch schwieriger zu bewegen ist und in weiterer Folge unwirtschaftlicher ist. Gemäß dieser Schrift erfolgt die Schwenkbewegung der Hackwerkzeuge um eine vertikale Achse.

### Kurzbeschreibung der Erfindung

Es ist Aufgabe der vorliegenden Erfindung, die oben geschilderten Nachteile zu vermeiden und eine wirtschaftliche Lösung zur Verbesserung der Reihen-Hackmaschine zu schaffen.

Diese Aufgabe wird durch eine Reihen-Hackmaschine der eingangs genannten Art erfindungsgemäß dadurch gelöst, dass der Antrieb der Hackwerkzeuge durch Zylinder, vorzugsweise Pneumatikzylinder, die im Wesentlichen vertikal angeordnet sind, erfolgt. Durch die vertikale Anordnung wird erheblich Platz gespart. Durch die Verwendung von Pneumatikzylindern kann eine sehr schnelle Schwenkbewegung bewirkt werden.

Nach einer Ausgestaltung der Erfindung weisen die Hackwerkzeuge, quer zur Fahrtrichtung gesehen, einen Abstand zueinander auf, aber in Fahrtrichtung gesehen grenzen sie im geschlossenen Zustand zumindest aneinander. Wenn eine Nutzpflanze passiert wird, werden die entsprechenden Hackwerkzeuge nacheinander weggeklappt, damit die Nutzpflanze nicht beschädigt wird. Dadurch wird die unbearbeitete Fläche auf ein Minimum reduziert. Die Maschine kann durch ihre zwei Hackelemente pro Hackeinheit deutlich schneller arbeiten als eine Maschine mit nur einem Hackelement pro Hackeinheit, und es können zwischen den Hackwerkzeugen keine Steine oder ähnliches eingeklemmt werden, da diese zueinander beabstandet sind. Weiters erfolgt keine Bewegung von Erde in Richtung zur Nutzpflanze. Dennoch wird der gesamte Bereich zwischen den Nutzpflanzen bearbeitet, da die Hackwerkzeuge in Fahrtrichtung gesehen zumindest aneinandergrenzen.

Vorzugsweise greifen die Zylinder an den Hackwerkzeugen an einem Punkt zwischen dem untersten Ende der Hackwerkzeuge und der Achse, um jene die Hackwerkzeuge schwenkbar sind, an. Die Hackwerkzeuge sind also als einarmige Hebel ausgebildet. Durch den somit vergleichsweise kurzen schwenkbaren Arm wird das Massenträgheitsmoment reduziert. Dies hat zur Folge, dass die Hackwerkzeuge leichter bzw. schneller bewegt werden können. Das ermöglicht schnellere Fahrgeschwindigkeiten der Reihen-Hackmaschine. Dies wiederum bewirkt eine Erhöhung der Wirtschaftlichkeit.

Vorzugsweise sind an den Hackwerkzeugen Hackmesser austauschbar befestigt. Da die Hackmesser, also die Teile der Hackwerkzeuge unter der Erde, verschleißen und/oder beschädigt werden können, ist es günstig, wenn man nur diese tauschen kann und der Rest der Hackwerkzeuge weiterverwendet werden kann.

### Kurze Beschreibung der Zeichnungsfiguren

Anhand der beiliegenden Zeichnungen wird die Erfindung näher erläutert. Es zeigt:

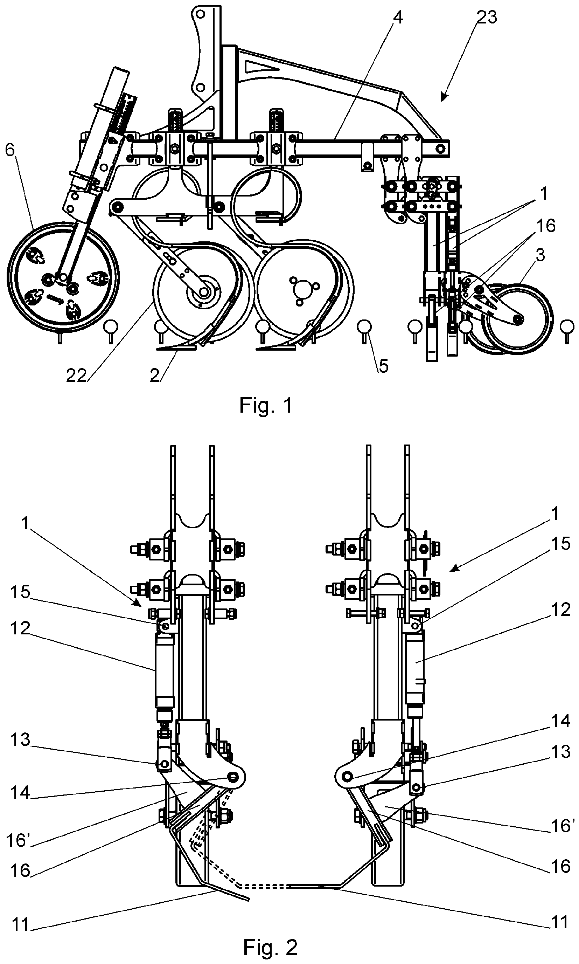

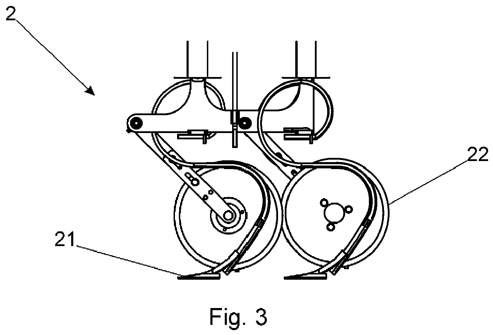

Fig. 1 eine Hackeinheit einer erfindungsgemäßen Reihen-Hackmaschine in Seitenansicht, also quer zur Fahrtrichtung gesehen; Fig. 2 die zwei beweglichen Hackelemente davon mit je einem Hackwerkzeug für eine Reihe von Nutzpflanzen, in Fahrtrichtung gesehen, mit einem ausgefahrenen und einem eingefahrenen Pneumatik-Zylinder; und Fig. 3 starre Hackelemente davon in Seitenansicht, die zwischen den Nutzpflanzenreihen verwendet werden.

### Beschreibung der Ausführungsarten

Fig. 1 zeigt eine seitliche Ansicht einer Hackeinheit 23 der erfindungsgemäßen Reihen-Hackmaschine. Hierbei sind starre Hackelemente 2 und bewegliche Hackelemente 1 mit schwenkbaren Hackwerkzeugen 16 dargestellt. Man erkennt in der Ansicht von Fig. 1 quer zur Fahrtrichtung, dass die zusammengehörigen beweglichen Hackelemente 1 mit ihren Hackwerkzeugen 16 in Fahrtrichtung gegeneinander versetzt sind. Durch Tasträder 3 wird eine präzise Tiefenführung der beweglichen Hackelemente 1 erzielt. Die starren Hackelemente 2 und die beweglichen Hackelemente 1 sind auf einem Trägerrahmen 4 befestigt. Stützräder 6 für die gesamte Hackeinheit 23 stützen das Gewicht des Trägerrahmens 4 ab und übernehmen gleichzeitig die Tiefenführung der starren Hackelemente 2. Nutzpflanzen 5 werden von der Reihen-Hackmaschine zwischen den starren Hackelementen 2 und auch zwischen den beweglichen Hackelementen 1 passiert, weil die Hackwerkzeuge 16 der beweglichen Hackelemente 1 öffnen (zur Seite schwenken), bevor sie mit einer Nutzpflanze kollidieren würden. Würden die beweglichen Hackwerkzeuge 16 geschlossen bleiben, würden sie die Nutzpflanzen zerhacken, da sie - in Fahrtrichtung gesehen - zumindest aneinander grenzend sind, wie an Hand von Fig. 2 gezeigt wird.

In Fig. 2 sind zweibewegliche Hackelemente 1 mit jeweils einem Hackwerkzeug 16, die für eine einzelne Reihe von Nutzpflanzen vorgesehen sind, gezeigt. Die auf den Hackelementen 1 montierten Hackwerkzeuge 16 sind jeweils um eine Achse 14 schwenkbar. Der linke Pneumatik-Zylinder 12 ist eingefahren (somit das Hackwerkzeug 16 weggeschwenkt, durchgezogene Linien), der rechte Pneumatik-Zylinder 12 ist ausgefahren (somit das Hackwerkzeug 16 eingeschwenkt) dargestellt. Diese Stellung tritt dann auf, wenn sich eine Nutzpflanze 5 auf derselben Höhe wie der linke Pneumatik-Zylinder 12 befindet. Dadurch wird sehr knapp um die Nutzpflanze 5 gepflügt. Beide Pneumatik-Zylinder 12 sind einerseits am feststehenden Teil des beweglichen Hackelements 1 um ein Gelenk 15 schwenkbar befestigt und greifen jeweils über ein Gelenk 13 und ein Betätigungselement 16' an einem beweglichen Hackwerkzeug 16 an. Die vom vertikal verbauten Zylinder 12 betätigten Hackwerkzeuge 16, auf denen die austauschbaren Hackmesser 11 befestigt sind, sind auf der Achse 14, die parallel zur Fahrtrichtung liegt, drehbar gelagert und schwenken bei vorbeikommenden Pflanzen ein und aus. Das Betätigungselement 16' greift an einem Punkt zwischen dem untersten Ende des Hackwerkzeugs 16, also zwischen den eigentlichen Hackmessern 11, und der Achse 14, um die die Hackwerkzeuge 16 schwenkbar sind, an. Da kein langes Gestänge benötigt wird, ist die Masse, die bewegt werden muss, gering. Durch die vertikale Anordnung der Pneumatik-Zylinder 12 ist die gesamte Anordnung sehr Platz sparend. Bei Betätigung eines Pneumatik-Zylinders 12 wird das Hackwerkzeug 16 mit dem austauschbaren Hackmesser 11 um die Achse 14 gedreht. Links ist das Hackmesser 11 strichliert in der geschlossenen Stellung gezeigt. Wie man sieht, scheint es aus dieser Blickrichtung, dass die Hackmesser einander gerade berühren (obwohl sie in Fahrtrichtung gegeneinander versetzt sind), sodass der gesamte Boden (ausgenommen der Bereich unmittelbar um Nutzpflanzen) bearbeitet wird.

Fig. 3 zeigt eine seitliche Ansicht des starren Hackelements 2. Hierbei handelt es sich um eine übliche Anordnung einer Hackschare 21. Diese wird verwendet, um zwischen den Reihen der Nutzpflanzen zu hacken. Es wird durch Stützräder 6 für starre Hackelemente 2 die grobe Tiefenführung der starren Hackschare 21 sichergestellt. Pflanzenschutzscheiben 22 verhindern ein Verschütten der Kulturpflanzen durch die von der starren Hackschare 21 bewegte Erde.

### Liste der Bezugszeichen

1 Bewegliches Hackelement
2 Starres Hackelement
3 Tastrad für bewegliche Hackelemente
4 Trägerrahmen
5 Nutzpflanze
6 Stützrad
11 bewegliches Hackmesser
12 Pneumatik-Zylinder
13, 15 Gelenke
14 Achse
16 Hackwerkzeug
16' Betätigungselement
21 starre Hackschare
22 Pflanzenschutzscheibe
23 Hackeinheit

## Patentansprüche

1. Reihen-Hackmaschine mit einer Hackeinheit (23) pro Reihe, wobei jede Hackeinheit (23) zwei bewegliche Hackelemente (1) aufweist, wobei jedes bewegliche Hackelement (1) ein um eine parallel zur Fahrtrichtung liegende Achse (14) schwenkbares Hackwerkzeug (16) aufweist, **dadurch gekennzeichnet, dass** der Antrieb der Hackwerkzeuge (16) durch Zylinder, vorzugsweise Pneumatik-Zylinder (12), erfolgt, die im Wesentlichen vertikal angeordnet sind.

2. Reihen-Hackmaschine nach Anspruch 1, **dadurch gekennzeichnet, dass** die Hackwerkzeuge (16), quer zur Fahrtrichtung gesehen, einen Abstand zueinander aufweisen, aber in Fahrtrichtung gesehen im geschlossenen Zustand zumindest aneinandergrenzen.

3. Reihen-Hackmaschine nach Anspruch 2, **dadurch gekennzeichnet, dass** die Zylinder an den Hackwerkzeugen (16) an einem Punkt zwischen dem untersten Ende der Hackwerkzeuge (16) und der Achse (14), um jene die Hackwerkzeuge (16) schwenkbar sind, angreifen.

4. Reihen-Hackmaschine nach einem der Ansprüche 1 bis 3, **dadurch gekennzeichnet, dass** an den Hackwerkzeugen (16) Hackmesser (11) austauschbar befestigt sind.
